# EUROPÄISCHE PATENTSCHRIFT

(11) **EP 2 514 317 B1**
(45) Veröffentlichungstag und Bekanntmachung des Hinweises auf die Patenterteilung: **02.05.2018**
(21) Anmeldenummer: 12158459.3
(22) Anmeldetag: 07.03.2012
(51) Int. Cl.: A21C 11/00, A21C 11/04

(54) **Teigformungsstation zur Formung eines Teigrings**
Dough shaping station for shaping a dough ring
Station de formage pour former un anneau de pâte

(30) Priorität: 18.04.2011 DE 102011007558
(43) Veröffentlichungstag der Anmeldung: 24.10.2012
(73) Patentinhaber: WP Kemper GmbH, 33397 Rietberg (DE)
(72) Erfinder: Lazis, Jan, 33605 Bielefeld (DE); Hagenhoff, Thomas, 33129 Delbrück (DE)
(74) Vertreter: Rau, Schneck & Hübner Patentanwälte Rechtsanwälte PartGmbB

(56) Entgegenhaltungen:
- DE-B- 1 286 472
- GB-A- 908 168
- US-A- 1 340 805
- US-A- 1 505 800
- US-A- 1 753 217
- US-A- 2 000 027

## Beschreibung

Die Erfindung betrifft eine Teigformungsstation für eine Vorrichtung zur Formung eines Teigrings sowie eine Vorrichtung zur Formung eines Teigrings mit einer derartigen Teigformungsstation.

Die DE 12 86 472 B, die US 2 000 027 A und die US 1 340 805 A offenbaren jeweils Vorrichtungen zur Bearbeitung von Teig.

Aus der EP 1 600 058 A2 ist eine Vorrichtung zur Formung eines backfertigen, schlusslosen Teigrings bekannt. Dort ist eine Teigformungsstation als Stanzstation offenbart, wobei mittels eines Stanzstempels ein zentraler Teiglingabschnitt ausgestanzt wird. Der Teigring ist auf einer Fördereinrichtung angeordnet. Beim Ausstanzen des Teiglingabschnitts wird der Stanzstempel gegen das darunter liegende Förderband gepresst. Das Förderband wird mechanisch beansprucht.

Es ist eine Aufgabe der vorliegenden Erfindung, eine Teigformungsstation für eine Vorrichtung zur Formung eines Teigrings derart zu schaffen, dass ein Produktwechsel herzustellender Teigringe vereinfacht ist und insbesondere ein Verschleiß von Werkzeugen zur Teigformung reduziert ist.

Diese Aufgabe ist erfindungsgemäß gelöst durch eine Teigformungsstation für eine Vorrichtung zur Formung eines Teigrings mit den im Anspruch 1 angegebenen Merkmalen.

Erfindungsgemäß wurde erkannt, dass eine Teigformungsstation zur Formung eines Teigrings mindestens einen Stempel und mehrere, jeweils mit dem mindestens einen Stempel zusammenwirkende Teigformungseinsätze aufweist. Die Teigformungsaufsätze sind an einer äußeren Mantelfläche einer Walze angeordnet. Die Walze weist eine Walzen-Drehachse auf. Der mindestens eine Stempel ist an einem Stempelbalken angeordnet, wobei eine Stempelbalken-Längsachse parallel zu der Walzen-Drehachse orientiert ist. Der Stempelbalken weist einen Hubantrieb zur Verlagerung des Stempelbalkens mit dem mindestens einen Stempel entlang einer Hubrichtung relativ zur Walze auf. Die Hubrichtung ist senkrecht zur Walzen-Drehachse orientiert. Zur Formung des Teigrings ist der Teigling zwischen dem mindestens einen Stempel und dem Teigformungseinsatz der Walze angeordnet, wobei mittels des Hubantriebs der Stempel auf die Walze zu bewegt wird. Dadurch ist es möglich, dass der mindestens eine Stempel in den Teigling eintaucht, um einen zentral angeordneten Teiglingabschnitt auszustanzen. Der mindestens eine Stempel und der Teigformungseinsatz sind derart aufeinander abgestimmt, dass während der Teigformung in der Teigformungsstation der Stempel während einer Hubbewegung zumindest abschnittsweise und/oder zumindest zeitweise in einer von dem Teigformungseinsatz gebildeten Teigformungseinsatzöffnung angeordnet ist. Das bedeutet, dass der Stempel in die Teigformeinsatzöffnung des Teigformungseinsatzes "eintaucht". Dadurch wird ein direkter Kontakt zwischen dem mindestens einen Stempel und dem Teigformungseinsatz vermieden. Ein Verschleiß der beiden Werkzeuge zur Teigformung, d. h. des mindestens einen Stempels und des Teigformungseinsatzes, ist reduziert. Dadurch, dass mehrere entlang einer Drehrichtung um die Walzen-Drehachse angeordnete Teigformungseinsätze vorgesehen sind, kann der Verschleiß je Teigformungseinsatz mit der Teigformungsstation zusätzlich reduziert werden. Insbesondere ist auch die Variabilität der mit der genannten Teigformungsstation herzustellenden Produkte verbessert. Beispielsweise können damit kleine Teigringe, sogenannte "Mini-Donuts" hergestellt werden, die ein Gewicht von beispielsweise 15 bis 18 g aufweisen. Mit der genannten Teigformungsstation können auch herkömmliche Donuts hergestellt werden. Insbesondere ermöglicht die Teigformungsstation einen Produktwechsel auf einer Teigbearbeitungsanlage, wobei ein Werkzeugrüstwand dafür reduziert ist und somit insbesondere ein schneller Produktwechsel vollzogen werden kann. Die genannte Teigformungsstation kann zudem zu einem verbesserten und insbesondere störungsfreien Abtransport von ausgestanzten TeiglingAbschnitten führen.

Eine Teigformungsstation nach Anspruch 2 ermöglicht eine wechselnde Anordnung der Walze derart, dass der mindestens eine Stempel in aufeinanderfolgenden Hüben mit verschiedenen Teigformungseinsätzen zusammenwirken kann. Dadurch ist es beispielsweise möglich, dass mehrere an der Walze vorgesehene Teigformungseinsätze gleichmäßig, d. h. mit gleicher Anzahl an Teigformungshüben beansprucht werden. Dadurch wird die Standzeit der Walze erhöht. Aufgrund des Walzenantriebs, der eine Drehbewegung der Walze in einer Drehrichtung ermöglicht, kann die Walze zudem eine Mitnahme-/Förderfunktion für den Teigling übernehmen. Die Drehbewegung der Walze kann getaktet oder kontinuierlich erfolgen.

Eine Teigformungsstation nach Anspruch 3 ermöglicht eine höhere Produktionsrate, da mit einem Hub des Stempelbalkens mehrere senkrecht zu einer Förderrichtung angeordnete Teiglinge bearbeitet werden. Dabei kann eine Teigformungseinsatzanordnung beispielsweise entlang der Walzen-Drehachse zehn Teigformungseinsätze aufweisen. Entsprechend weist eine Stempelanordnung entlang der Stempelbalken-Längsachse an dem Stempelbalken zehn Stempel auf. Es sind auch andere Anzahlen möglich, je nach Größe und Anzahl der zu formenden Teigringe bzw. eines Förderbandes.

Eine Teigformungsstation nach Anspruch 4 weist eine zusätzlich erhöhte Produktivität auf. Eine Teigformungsstation kann entlang der Drehrichtung äquidistant angeordnete Teigformungseinsatzanordnungen aufweisen und ermöglicht eine zyklisch wechselnde Nutzung der Teigformungseinsatzanordnungen an der Walze. Insbesondere sind die Teigformungseinsatzanordnungen mit einem Drehwinkel von 90° bezüglich der Walzen-Drehachse gleich beabstandet zueinander angeordnet. Das bedeutet, dass zwischen zwei Hüben die Walze um die Walzen-Drehachse um 90° gedreht wird. In einem ersten Hub wirkt die Stempelanordnung mit einer ersten Teigformungseinsatzanordnung zusammen. Nach der 90°-Drehbewegung um die Walzen-Drehachse entlang der Drehrichtung wirkt die Stempelanordnung mit einer zweiten Teigformungseinsatzanordnung zusammen.

Eine Teigformungsstation nach Anspruch 5 weist eine verbesserte Einsatzvariabilität auf, indem verschiedene Teigformungseinsätze in verschiedenen Teigformungseinsatzanordnungen vorgesehen sind. Dadurch ist es möglich, die Herstellung einer neuen Produktlinie mit derselben Teigformungsstation durchzuführen, wobei Umrüstarbeiten nicht erforderlich sind. Eine neue Produktlinie umfasst in diesem Zusammenhang beispielsweise Teiglinge unterschiedlicher Größe, also mit unterschiedlichen Innen- und/oder Außendurchmessern der Teigringe, wobei die Teigformungseinsätze unterschiedliche Innendurchmesser aufweisen. Beispielsweise ist es möglich, drei Gruppen verschiedener Teigformungsanordnungen abwechselnd entlang des Umfangs der Walze anzuordnen, wobei jeweils zwischen gleichartigen Teigformungseinsatzanordnungen ein Drehwinkel bezüglich der Walzen-Drehachse von 90° vorgesehen ist. Insgesamt weist eine derartige Walze als zwölf Teigformungseinsatzanordnungen auf. Es ist auch möglich, verschiedene Teigformungseinsatzanordnungen quer zur Walzen-Drehachse anzuordnen. In diesem Fall könnten entlang des Umfangs der Walze identische Teigformungseinsätze vorgesehen sein, die jeweils eine Teigformungseinsatzanordnung bilden. Eine Teigformungseinsatzanordnung ist also ringförmig zur Walz-Drehachse am Umfang der Walze angeordnet. Entsprechend weist die Walze in diesem Fall quer zur Drehrichtung eine veränderliche Teilung zwischen Teigformungseinsätzen auf.

Eine Teigformungsstation nach Anspruch 6 weist mehrere Stempelanordnungen an dem Stempelbalken auf. Dadurch ist es möglich, die Rüstzeit bei einem Produktwechsel an der Teigformungsstation zusätzlich zu reduzieren. Durch eine Drehung des Stempelbalkens um die Stempelbalken-Längsachse ist eine von einer ersten Stempelanordnung verschiedene zweite Stempelanordnung in eine Bearbeitungsposition verlagerbar. Es ist möglich, dass die Stempel der verschiedenen Stempelanordnungen identisch sind. Dadurch ist es möglich, ein Intervall für einen Stempelwechsel zu reduzieren. Es ist zusätzlich oder alternativ möglich, bei mindestens einer Stempelanordnung Stempel verschiedener Stempelgeometrien einzusetzen. Dadurch wird die Variabilität herzustellender Teigringe erhöht. Stillstandzeiten der Teigformungsstation infolge eines erforderlichen Werkzeugwechsels sind dadurch reduziert.

Eine Teigformungsstation nach Anspruch 7 ermöglicht die Herstellung von Teigringen mit erhöhter Fertigungsgenauigkeit. Dadurch, dass die Teigformungseinsätze selbstzentrierend an der Walze angeordnet sind, ist die Montage und Demontage schneller und vereinfacht möglich. Insbesondere ist eine zeit- und kostenaufwändig durchzuführende Justage der Teigformungseinsätze nicht erforderlich. Dazu kann vorgesehen sein, dass die Teigformungseinsätze an der Walze ein Gewinde und insbesondere ein Feingewinde zum Anschrauben an die Walze aufweisen. Dies ermöglicht beispielsweise eine Positionierung der Teigformungseinsätze an der äußeren Mantelfläche der Walze mit einer Genauigkeit von 0,05 mm.

Eine Teigformungsstation nach Anspruch 8 ermöglicht das Ausstanzen eines insbesondere zentral angeordneten Teiglingabschnitts eines Teiglings. Dadurch ist es möglich, einen schlusslosen Teigring schnell und unkompliziert herzustellen. Insbesondere ist es möglich, dass Stanz-Matrizen eine durchgängige und insbesondere radial zur Walzen-Drehachse orientierte Matrizenöffnung als Teigformungseinsatzöffnungen aufweisen, sodass der ausgestanzte Teiglingabschnitt durch die Matrizenöffnung in das Innere der Walze gestoßen wird. Zur Verbesserung des Abtransports des ausgestoßenen Teiglingabschnitts kann im Inneren der Walze ein Austrageband angeordnet sein, dass die automatische Abförderung der ausgestanzten Teiglingabschnitte ermöglicht.

Eine Teigformungsstation nach Anspruch 9 ermöglicht die Herstellung verschiedener Teigringgrößen insbesondere mit verschiedenen Innendurchmessern der Teigringe bei reduzierter Rüstzeit der Teigformungsstation. Dadurch, dass die Stanz-Matrizen verschiedene Matrizen-Innendurchmesser aufweisen, können Teigringe verschiedener Größen schnell und unkompliziert hergestellt werden. Es ist auch möglich, anstelle oder zusätzlich zu Stanz-Matrizen verschiedener Matrizendurchmesser andere Werkzeugeinsätze an der Walze vorzusehen, wie beispielsweise Stüpfelformen oder andere formgebende Werkzeugkavitäten. Analog zu der Anordnung der Teigformungseinsatzanordnungen gemäß Anspruch 6 ist es auch möglich, verschiedene Stanz-Matrizen oder andere Werkzeugeinsätze quer zur Drehrichtung, d. h. entlang der Walzen-Drehachse, vorzusehen.

Eine Teigformungsstation nach Anspruch 10 weist eine Walze mit verbesserter Funktionsintegration auf. Dadurch, dass die Walze an ihrer äußeren Mantelfläche ebene Auflageflächenabschnitte im Bereich der Teigformungseinsätze aufweist, ist es möglich, die Walze zur Aufnahme, Mitnahme, Teigformung, Weitergabe und Übergabe des Teiglings an eine anschließende Fördereinrichtung zu nutzen. Dazu wird die Walze während eines Teigbearbeitungsschrittes an der Teigformungsstation um die Walzen-Drehachse gedreht, wobei insbesondere während der Teigformung durch die Stempel der ebene Auflageflächenabschnitt senkrecht zu einer Hubrichtung der Stempelhubbewegung und insbesondere horizontal angeordnet ist. In dieser Anordnung verharrt die Walze während des Teigformungsprozesses, die Walze wird also nicht gedreht.

Eine Teigformungsstation nach Anspruch 11 ermöglicht die Herstellung von Teigringen mit erhöhter Fertigungsgenauigkeit. Insbesondere ist der ausgestanzte Teiglingabschnitt konzentrisch zu der Scheibenform des Teiglings ausgerichtet. Dazu ist eine Zentriereinrichtung über eine Steuer-Einheit mit dem mindestens einen Stempel in Signalverbindung. Die Steuer-Einheit ermöglicht eine gesteuerte kinematische Verbindung der Zentriereinrichtung mit dem mindestens einen Stempel. Die Zentriereinrichtung kann aber auch unabhängig von dem mindestens einen Stempel über die Steuer-Einheit verlagert werden. Infolge der Hubbewegung des mindestens einen Stempels gelangt zunächst die Zentriereinrichtung mit dem Teigling in Kontakt und gewährleistet einen Zentrierung des Teiglings auf dem Teigformungseinsatz. Dadurch ist der ungestanzte Teigling sowohl bezüglich des mindestens einen Stempels als auch bezüglich des Teigformungseinsatzes zentriert ausgerichtet. Anschließend erfolgt die Teigformung durch den mindestens einen Stempel.

Bei einer Teigformungsstation nach Anspruch 12 ist die Montage und Demontage des Stempels an dem Stempelbalken vereinfacht. Insbesondere ist eine automatische Andockung des Stempels an einen Druckluftkanal des Stempelbalkens vorgesehen. Der Druckluftkanal dient einer unterstützenden Druckluftbeaufschlagung des auszustanzenden Teiglingabschnitts während eines Stanzprozesses. Dadurch wird gewährleistet, dass ein mittels des Stempels ausgestanzter Teiglingabschnitt nicht an dem Stempel anhaftet und somit zu einer Beeinträchtigung nachfolgender Stanzoperationen führt. Weiterhin ist es möglich, dass der mindestens eine Stempel ein Gewinde und insbesondere ein Feingewinde zum Anschrauben an dem Stempelbalken aufweist. Darüber hinaus kann der Stempel eine dem Stempelbalken zugewandte Passfläche aufweisen, wodurch der Stempel an dem Stempelbalken in einer definierten Position angeordnet ist.

Eine Teigformungsstation nach Anspruch 13 ermöglicht einen verbesserten Betrieb der Vorrichtung. Dadurch, dass eine Steuerungseinheit eine elektronische Zwangssteuerung ermöglicht, ist es nicht erforderlich, einzelne Bearbeitungsstationen der Vorrichtung separat hinsichtlich einer aktuellen Teigling-Position zu überwachen. Eine derartige Überwachung hätte einen diskontinuierlichen, getakteten Betrieb der Vorrichtung zur Folge. Eine derartige Betriebsweise der Vorrichtung weist eine reduzierte Produktionsgeschwindigkeit, also Produktionsrate auf. Infolge ständiger Beschleunigungs- und Abbremsvorgänge, die sowohl auf die Fördereinrichtungen als auch auf die Teiglinge selbst wirken, werden die Fördereinrichtungen und die Teiglinge mechanisch beansprucht. Diese Nachteile werden mittels einer elektronischen Zwangssteuerung vermieden. Es ist insbesondere möglich, eine Master-Slave-Steuerung einzusetzen, bei der die Teigbearbeitung in der Teigformungsstation als Slave-Prozess durch die Teigbearbeitung an der Gärstation als Master-Prozess elektronisch gesteuert wird. Eine derartige Zwangssteuerung wird auch als elektronische oder virtuelle Kurvenscheibe bezeichnet.

Eine Teigformungsstation nach Anspruch 14 ermöglicht eine verbesserte Herstellung von Teigringen. Ein vorgeformter, scheibenförmiger Teigling weist vor einem Stanzvorgang eine im Wesentlichen kontinuierliche Teigmasse auf, die von einer insbesondere feinen Außenhaut umschlossen ist. Mit einem konzentrisch zu einer Stempel-Längsachse angeordneten Stanzabschnitt des mindestens einen Stempels wird die feine Außenhaut durchstoßen und ein Teiglingsabschnitt ausgestanzt. Beim Durchtrennen der dem Stempel zugewandten Stirnseite des Teiglings resultiert eine im Wesentlichen ringförmige Außenhaut-Oberfläche, die in das Innere des zu bearbeitenden Teiglings gestülpt ist. Bei einer weitern Fortführung des Stanzvorgangs wird die in das Innere des Teiglings ragende Außenhaut-Schnittfläche von einem Mitnahmeabschnitt des Stempels mitgenommen. Dadurch, dass der Mitnahmeabschitt ein gegenüber dem Stanzabschnitt vergrößerten Durchmesser bezüglich einer Stempel-Längsachse aufweist, wird durch den Mitnahmeabschnitt die durch den Stanzabschnitt erzeugte Öffnung in dem Teigling aufgeweitet, wobei die Außenhaut der oberen Stirnfläche des Teiglings durch den Mitnahmeabschnitt nicht gestanzt wird. Der Mitnahmeabschnitt nimmt die nach innen ragenden Außenhautschnittfläche mit und zieht diese längs der Hubbewegung des Stempels nach unten zu der unteren Stirnfläche des Teiglings, sodass die zuvor offenen Schnittfläche der Außenhaut der oberen Stirnfläche mit der Außenhaut der unteren Stirnfläche verbunden wird. Dadurch entsteht ein Teigring, der an allen Seitenflächen eine geschlossene Außenhaut aufweist. Insbesondere wird durch den stufenförmig ausgeführten Stempel eine zylinderförmige Außenhaut an der inneren Ringfläche des Teigrings hergestellt. Dadurch ist die Formgebung des Teigrings verbessert. Es ist insbesondere verhindert, dass beim Zurückziehen des Stempels nach dem Stanzvorgang zähflüssiger Teig des Teigrings an der inneren Zylindermantelfläche aus der Ringform des Teigrings austritt. Mit dem genannten Stempel können Teigringe mit einer höheren Genauigkeit und mit einer verbesserten Maßhaltigkeit hergestellt werden. Der genannte Stempel ist insbesondere rotationssymmetrisch zu der Stempel-Längsachse ausgebildet, wobei auch andere Querschnittsformen senkrecht zur Stempel-Längsachse möglich sind, wie beispielsweise eine rechteckige, sechseckige, ovale oder eine andere Form. Die Durchmesserdifferenz zwischen dem Stanz-Durchmesser und dem Mitnahme-Durchmesser ist insbesondere derart ausgelegt, dass die Hälfte der Durchmesserdifferenz der Dicke des Teiglings entlang der Stempel-Längsachse entspricht. Die Durchmesserdifferenz kann auch größer sein als der genannte Wert. Dadurch ist gewährleistet, dass die von dem Mitnahmeabschnitt mitgenommenen offenen Schnittflächen der oberen Stirnfläche bis nach unten zu der unteren Stirnfläche des Teigrings reichen, um dort zu einer geschlossenen Außenhaut verbunden zu werden.

Es ist eine weitere Aufgabe der vorliegenden Erfindung, eine Vorrichtung zur Formung eines Teigrings zu schaffen, die eine verbesserte Teigformung ermöglicht.

Diese Aufgabe ist erfindungsgemäß gelöst durch eine Vorrichtung mit den in Anspruch 15 angegebenen Merkmalen.

Eine derartige Vorrichtung weist eine erfindungsgemäße Teigformungsstation auf. Die Vorteile der Vorrichtung entsprechen denen der Teigformungsstation. Darüber hinaus ermöglicht die Vorrichtung sowohl einen getakteten als auch einen kontinuierlichen Betrieb zur Teigringherstellung. Es ist zudem möglich, mit der Vorrichtung einen Durchlaufbetrieb einzustellen, sodass ein Zusatzband für nicht zu bearbeitende Teig-Produkte, insbesondere für nicht zu stanzende Teig-Produkte, nicht erforderlich ist, da ein direkter Durchlauf an der Teigformungsstation möglich ist. Dies kann beispielsweise dadurch erfolgen, dass der Stempelbalken in einer Stempelanordnung keine Stempel aufweist bzw. derartige Stempel aufweist, die infolge einer Hubbewegung nicht mit den Teiglingen auf der Walze in Berührung kommen.

Ein Ausführungsbeispiel der Erfindung wird nachfolgend anhand der Zeichnung näher erläutert. In dieser zeigen:
- Fig. 1: eine interne Details zeigende Seitenansicht einer Vorrichtung zur Formung eines Teigrings gemäß dem Stand der Technik,
- Fig. 2: eine Fig. 1 entsprechende Seitenansicht einer erfindungsgemäßen Vorrichtung zur Formung eines Teigrings,
- Fig. 3: eine Fig. 2 entsprechende Seitenansicht eines Ausschnitts der Vorrichtung mit einer erfindungsgemäßen Teigformungsstation,
- Fig. 4: eine Fig. 3 entsprechende, vergrößerte Schnittdarstellung der Teigformungsstation,
- Fig. 5: eine schematische Darstellung eines Stanzvorgangs zur Herstellung eines Teigrings mit einem Stanzstempels gemäß einem ersten Ausführungsbeispiel und
- Fig. 6 bis 8: eine schematische Darstellung einer Stadienabfolge eines Stanzvorgangs zur Herstellung eines Teigrings mit einem Stanzstempel gemäß einem zweiten Ausführungsbeispiel.

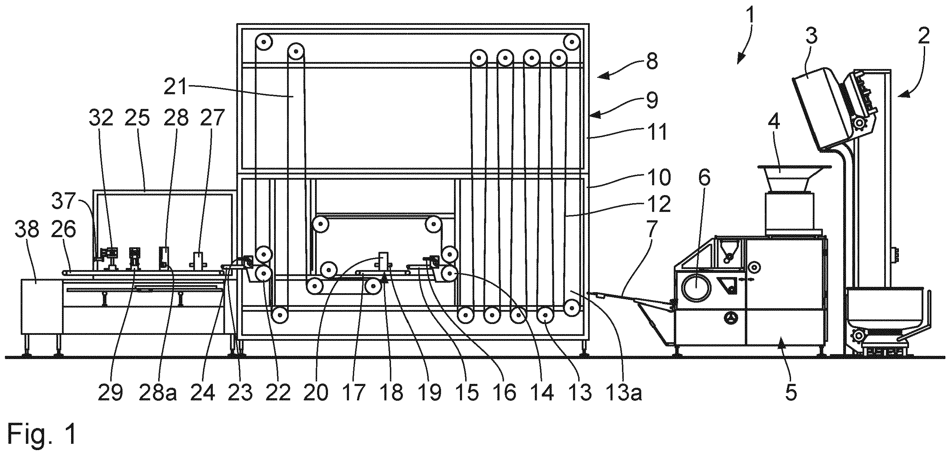

Eine in Fig. 1 dargestellte Ausführungsform einer Vorrichtung 1 zur Formung eines Teigrings 40 ist aus der EP 1 600 058 A2 bekannt. Die Vorrichtung in Form einer Teigbearbeitungsanlage 1 umfasst eine Hebekippvorrichtung 2 zum Zuführen von Teig. Die Hebekippvorrichtung 2 weist einen anheb- und schwenkbaren Trog 3 auf, der in Figur 1 sowohl in einer Knet- als auch in einer angehobenen und verschwenkten Abgabestellung dargestellt ist. In der Abgabestellung des Trogs 3 befindet sich unter diesem ein Zuführtrichter 4 einer Portionier- und Rundwirkeinrichtung 5. Die Portionier- und Rundwirkeinrichtung 5 umfasst eine Rundwirkstation 6. Diese ist durch ein sechsstrahliges Übergabeförderband 7 mit einer modular aufgebauten Gär- und Formvorrichtung 8 verbunden. Die weiteren Bearbeitungsstationen der Teigbearbeitungsanlage 1 verarbeiten parallel sechs Reihen von Teiglingen.

Mit dem Abgabeende des Übergabeförderbandes 7 in Förderverbindung steht eine Gehänge-Fördereinrichtung 9, die in zwei übereinander angeordneten Teilmodulen 10, 11 der Gär- und Formvorrichtung 8 untergebracht ist. Die Gehänge-Fördereinrichtung 9 umfasst eine Mehrzahl von nicht dargestellten Gehängen zur Aufnahme von Teiglingen. Die Gehänge sind mit einer Förderkette 12 verbunden, die über eine Mehrzahl von Umlenkrollen 13 endlos umlaufend geführt ist. Beim Fördern läuft die Förderkette 12 in den Teilmodulen 10, 11 im Wesentlichen im Uhrzeigersinn um.

Ausgehend vom Abgabeende des Übergabeförderbandes 7 verläuft die Förderkette 12 in einer Zwischengärstation 13a mehrmals auf und ab, bis ein Paar 14 von direkt übereinander liegenden Umlenkrollen 13 erreicht wird. Dort werden die Gehänge von einem Mitnehmer umgedreht, so dass die hierin befindlichen Teiglinge auf einen Förderbandabschnitt 15 gelangen. Diesem zugeordnet ist eine erste Andrückwalze 16, welche die unter ihr auf dem Förderbandabschnitt 15 vorbeilaufenden Teiglinge so vorformt, dass diese nicht undefiniert auf dem Förderbandabschnitt rollen können.

Vom Förderbandabschnitt 15 gelangen die Teiglinge auf einen weiteren Förderbandabschnitt 17. Diesem zugeordnet ist eine Druckstation 18. Diese weist ein Druckband 19 auf, die geführt von einem Ständer 20 angetrieben und bewegbar ist. Vom Abgabeende des weiteren Förderbandabschnitts 17 gelangen die Teiglinge nach der Druckstation 20 wieder in ein Gehänge der Gehänge-Fördereinrichtung 9. Die Gehänge-Fördereinrichtung 9 ist mit dem Betrieb der Förderbandabschnitte 15, 17 so synchronisiert, dass immer dann, wenn Teiglinge vom weiteren Förderbandabschnitt 17 abgegeben werden, ein Gehänge am Abgabeende des Förderbandabschnitts 17 zur Aufnahme der Teiglinge bereitsteht.

Über weitere Umlenkrollen 13 ist die Förderkette 12 im Anschluss an die Übergabestelle am Abgabeende des Förderbandabschnitts 17 nochmals nach oben und unten geführt. Hierbei durchlaufen die Gehänge eine zweite Zwischengärstation 21. Im Anschluss an diese passieren die Gehänge ein weiteres Paar 22 von Umlenkrollen 13 sowie eine weitere Andrückwalze 23 mit einem zugehörigen Förderbandabschnitt 24. Mit letzterem werden die Teiglinge in eine Formeinrichtung 25 der Gär- und Formvorrichtung 8 transportiert, die in einem weiteren Teilmodul von dieser untergebracht ist.

In der Formeinrichtung 25 gelangen die Teiglinge vom Förderbandabschnitt 24 zunächst auf einen weiteren Förderbandabschnitt 26. Dort passieren sie zunächst eine weitere Druckstation 27, die genauso aufgebaut ist wie die Druckstation 18. Anschließend werden die Teiglinge vom Förderbandabschnitt 26 hin zu einer Zentrierstation 28, in der die runden Teiglinge zentriert ausgerichtet werden, transportiert. Die Zentrierstation 28 weist zum Zentrieren der Teiglinge einen Anschlag 28a auf. Im Anschluss hieran werden die zentrierten Teiglinge vom Förderband 26 hin zu einer Verdrängungsstation 29 gefördert. Letztere umfasst ein in Figur 1 nicht sichtbares angetriebenes hubbewegbares Druckwerkzeug in Form eines Stempels mit balligem Ende. Ein Träger des Druckwerkzeugs ist an einem Ständer der Verdrängungsstation 29 montiert. In der Verdrängungsstation 29 erfolgt durch Drücken des Druckwerkzeugs auf den Teigling ein Verdrängen eines zentralen Teigabschnitts nach außen derart, dass die Teiglingsstärke im Zentrum des Teiglings gegenüber dem sonstigen Teigling reduziert ist.

Nach der Verdrängungsstation 29 wird der so vorgeformte Teigling mit dem Förderbandabschnitt 26 hin zu einer Stanzstation 32 gefördert. Die Stanzstation 32 stellt eine nicht erfindungsgemäße Teigformungsstation dar. Diese weist ein Stanzwerkzeug in Form eines angetriebenen hubbewegbaren Stanzstifts auf. Das Stanzwerkzeug ist an einem Träger montiert, der um eine zur Zeichenebene der Figur 1 senkrechte Schwenkachse zu einem Ständer der Stanzstation 32 schwenkbar gelagert ist. Das Stanzwerkzeug mit dem Träger ist in Figur 1 in einer Abgabestellung dargestellt, in der das Stanzwerkzeug relativ zur Stanzstellung in Figur 1 um 90° im Uhrzeigersinn um die Schwenkachse verschwenkt ist. In der Stanzstellung erstreckt sich das Stanzwerkzeug daher wie das Druckwerkzeug der Verdrängungsstation 29 vertikal, also senkrecht zur Förderebene, die vom Förderbandabschnitt 26 vorgegeben ist. In der Abgabestellung liegt unter dem freien Ende des Stanzwerkzeugs ein weiterer Förderbandabschnitt 37. Dieser dient dazu, den ausgestanzten Teiglingabschnitt, der vom Stanzwerkzeug abgestoßen wird, aufzunehmen und abzutransportieren. Die Stanzstation 32 kann zwei Stanzwerkzeuge aufweisen, wobei immer dann, wenn das eine der beiden Stanzwerkzeuge von der Stanzstellung in die Abgabestellung umgestellt wird, das andere der beiden Stanzwerkzeuge in die Stanzstellung nachrückt.

Im Anschluss an die Stanzstation 32 wird der ausgestanzte Teigling vom Förderbandabschnitt 26 zur weiteren Verarbeitung weitertransportiert. Dem Abgabeende des Förderbandabschnitts 26 ist eine Ablagestation 38 zugeordnet, in der die ausgestanzten Teiglinge auf Bleche abgelegt werden. Die Teiglinge werden dann manuell in Gärschränke zum Nachgären eingebracht. Die Teiglinge können auch automatisch zu einem oder mehreren Gärschränken transportiert werden.

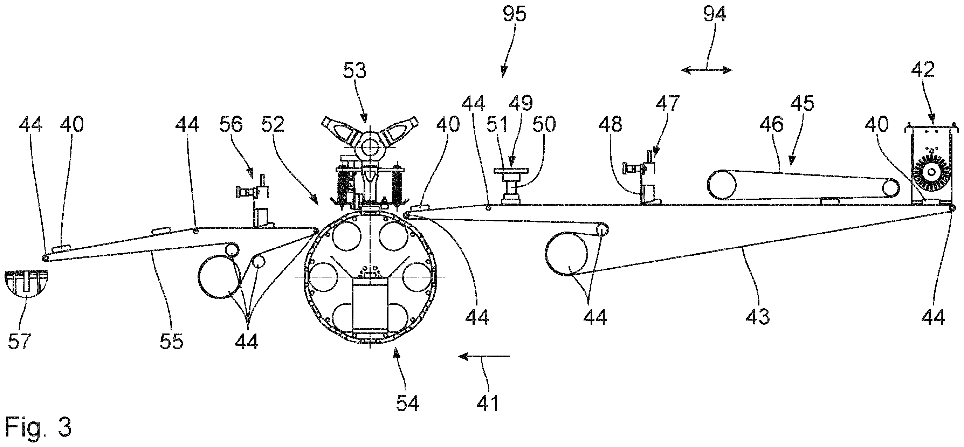

Mit der Teigbearbeitungsanlage 1 können schlusslose, backfertige Teigringe, z.B. Donuts, wie folgt hergestellt werden: Zunächst wird Teig in dem Trog 3 der Hebekippvorrichtung 2 geknetet und über den Zuführtrichter 4 automatisch in die Portionier- und Rundwirkeinrichtung 5 eingegeben. Das Kneten des Teigs in dem Trog 3 erfolgt in einem vorgelagerten Knet-Schritt mittels einer nicht dargestellten Knetvorrichtung. In der Portionier- und Rundwirkeinrichtung 5 erfolgt zunächst eine Portionierung des eingegebenen Teigs in einzelne Teiglinge, die dann in der Rundwirkstation 6 rundgewirkt werden. Die rundgewirkten Teiglinge gelangen anschließend sechsreihig über das Übergabeförderband 7 in die Gehänge der Gehänge-Fördereinrichtung 9 und werden in der ersten Zwischengärstation 13a zwischengegärt. Die Teiglinge gelangen dann gewendet auf den Förderbandabschnitt 15 und werden von der Andrückwalze 16 leicht angedrückt, so dass sie nicht undefiniert rollen können. Anschließend werden die Teiglinge in der Druckstation 18 durch das Zusammenwirken dem Druckband 19 mit dem Förderbandabschnitt 17 flächig stärker gedrückt, so dass sie eine abgeplattete runde Form erhalten. Es wird also ein Rundstück geformt, dessen Quererstreckung quer zur Druckrichtung größer ist als seine Höhe längs der Druckrichtung. Anschließend gelangen die gedrückten Teiglinge wieder in die Gehänge der Gehänge-Fördereinrichtung 9 und werden in der zweiten Zwischengärstation 21 weiter zwischengegärt. Sodann werden die Teiglinge wieder gewendet und gelangen auf den weiteren Förderbandabschnitt 24, wo sie ein weiteres Mal mit der Andrückwalze 23 leicht angedrückt werden, so dass sie nicht undefiniert rollen können. Es folgt ein weiteres stärkeres Drücken in der Druckstation 27, wobei die Teiglinge eine stärker abgeplattete Form erhalten. Nach dem Drücken der Teiglinge in den Druckstationen 18, 27 erfolgt jeweils ein Entspannen der Teiglinge. Anschließend werden die um eine vertikale Achse rotationssymmetrischen Teiglinge in der Zentrierstation 28 zentriert. Dies erfolgt mit Hilfe des Anschlags 28a. Nach dem Zentrieren gelangen die Teiglinge in die Verdrängungsstation 29, wo der zentrale Teiglingabschnitt mit Hilfe des Druckwerkzeugs verdrängt wird. Dann gelangen die Teiglinge in die Stanzstation 32, wo der zentrale Teiglingabschnitt, der dann aufgrund des Verdrängens nur noch als dünne Haut vorliegt, mit Hilfe des Stanzwerkzeugs ausgestanzt wird. Der verdrängte Teiglingabschnitt sowie das durch das Stanzen gebildete Innenloch im Teigling liegen zentral in diesem. Das Stanzwerkzeug wird nach dem Stanzen in die in Figur 3 gezeigte Abgabestellung überführt und gibt den ausgestanzten Teiglingabschnitt auf den Förderabschnitt 37 ab. Der nach dem Ausstanzen entstandene Teigring wird dann in der Ablagestation 38 auf Bleche abgelegt. Nach dem Nachgären werden die Teigringe entweder tiefgefroren, durch eine nicht dargestellte Endgärstation geführt oder gleich zu Donuts gebacken.

Die Teigbearbeitungsanlage 1 arbeitet getaktet. Insbesondere der Förderbandabschnitt 26 fördert taktweise, wobei das Drücken in der Druckstation 27, das Verdrängen in der Verdrängungsstation 29 und das Stanzen in der Stanzstation 32 erfolgen, wenn die Teiglinge ruhen. Die getaktete Förderung der Förderbänder 7, 15, 17, 24 und 26 ist mit der Förderung der Gehänge-Fördereinrichtung 9 synchronisiert.

Die Teigbearbeitungsanlage 1 nach den Figuren 1 bis 4 weist zwei Druckstationen 18, 27 auf. Alternativ kann auch eine andere Anzahl von Druckstationen vorgesehen sein.

Zur Herstellung von Berlinern können die Verdrängungsstation 29 und die Stanzstation 32 und gegebenenfalls auch die Druckstationen 18 und 27 derart inaktiviert werden, dass die Teiglinge diese Stationen passieren, ohne dort geformt zu werden. Die Teigbearbeitungsanlage 1 kann ansonsten genauso betrieben werden, wie oben im Zusammenhang mit der Herstellung von Donuts beschrieben. Auf diese Weise können mit der Teigbearbeitungsanlage 1 auch Berliner hergestellt werden. Ein derartiger Betrieb der Teigbearbeitungsanlage 1 wird auch als Durchlaufbetrieb bezeichnet.

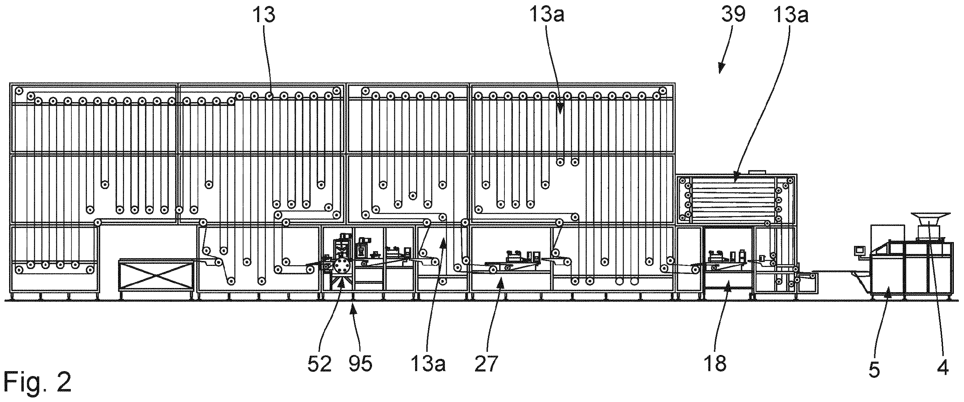

In Fig. 2 ist eine erfindungsgemäße Ausführungsform einer Vorrichtung 39 zur Formung eines Teigrings 40 dargestellt. Komponenten, die mit Bezugnahme auf die in Fig. 1 dargestellte Ausführungen bereits erläutert wurden, tragen die gleichen Bezugsziffern und werden nicht nochmals im Einzelnen erläutert.

Der wesentliche Unterschied der erfindungsgemäßen Vorrichtung 39 betrifft eine Teigbearbeitungs-Einheit 95 und eine erfindungsgemäße Teigformungsstation 52.

Weiterhin umfasst die Vorrichtung 39 zwei Druckstationen 18, 27, die als Flachdruckstationen entsprechend der Vorrichtung 1 ausgeführt sind. Vor der ersten Flachdruckstation 18, zwischen den Flachdruckstationen 18, 27, zwischen der Flachdruckstation 27 und der Teigbearbeitungs-Einheit 95 und nach der Teigbearbeitungs-Einheit 95 mit Teigformungsstation 52 sind Vor-, Zwischen- und Endgärstationen 13a vorgesehen, die entsprechend ein Vor-, Zwischen- und Endgären der Teiglinge zwischen den einzelnen Bearbeitungsstationen 18, 27 und 95 sowie davor und danach ermöglichen. Die Gärstationen 13a sind in dafür vorgesehenen Gärschränken angeordnet. Die Gärstationen 13a können je nach herzustellendem Produkt einzeln und insbesondere unabhängig voneinander in den Produktionsablauf, d. h. an der Vorrichtung 39 zu- bzw. abgeschaltet werden, sodass beispielsweise einzelne oder alle Gärschritte zwischen den einzelnen Bearbeitungsstationen auch entfallen können. Bei der Vorrichtung 39 werden insbesondere zwischen null und drei Flachdruckstationen eingesetzt. Es ist auch denkbar, mehr als drei Flachdruckstationen vorzusehen.

Fig. 3 zeigt die Teigbearbeitungs-Einheit 95 als einen Ausschnitt der Vorrichtung 39 mit einer erfindungsgemäßen Teigformungsstation 52. Komponenten, die denjenigen entsprechen, die vorstehend schon unter Bezugnahme auf die Fig. 1 erläutert wurden, tragen die gleichen Bezugszeichen und werden nicht nochmals im Einzelnen diskutiert. Die Darstellung der Teigbearbeitungs-Einheit 95 in Fig. 3 ist schematisch und daher vereinfacht. Insbesondere sind aus Gründen der Übersichtlichkeit Struktur-Bauteile und beispielsweise ein Maschinenrahmen der Vorrichtung 39 bzw. der Teigbearbeitungs-Einheit 95 sowie der Teigformungsstation 52 nicht komplett dargestellt. Die Teigformungsstation 52 kann die Stanzstation 32 gemäß Fig. 1 ersetzen.

Der in Fig. 3 gezeigte Ausschnitt der Vorrichtung 39 schließt sich der Gär- und Formvorrichtung 13a an und dient zur Bearbeitung der Teiglinge 40 entlang einer Teigling-Förderrichtung 41. Die Vorrichtung 39 kann auch eine Kneteinrichtung, eine Hebekippvorrichtung und/oder eine Portionier- und Rundwirkeinrichtung aufweisen.

Der in Fig. 3 dargestellte Ausschnitt der Vorrichtung 39 umfasst entlang der Teigling-Förderrichtung 41 eine Bestreuungsstation 42 zur Bestreuung der Teiglinge 40 mit Mehl. Es ist auch möglich, dass die Teiglinge 40 mit einem anderen pulverförmigen Medium als Mehl bestreut werden. Von der Bestreuungsstation 42 erfolgt die Förderung der Teiglinge 40 entlang der Teigling-Förderrichtung 41 mittels eines als Fördereinrichtung ausgebildeten Transportbandes 43. Das Transportband 43 ist über mehrere Antriebs-/ Umlenkrollen 44 geführt bzw. angetrieben. Entlang der Teigling-Förderrichtung 41 ist der Bestreuungsstation 42 eine Flachdruckstation 45 nachgeordnet. Die Flachdruckstation 45 umfasst ein angetriebenes Oberband 46, das in einem dem Transportband 43 zugewandten, unteren Abschnitt im Wesentlichen parallel zu dem Transportband 43 verläuft. Das Oberband 46 ist bezüglich seiner Lage zu dem Transportband 43 derart verlagerbar, dass ein zwischen dem Oberband 46 und dem Transportband 43 gebildeter Spalt veränderbar einstellbar ist. Der Spalt kann längs der Teigling-Förderrichtung 41 eine konstante Spaltbreite aufweisen oder auch einen konischen Verlauf der Spaltbreite derart haben, dass die Spaltbreite längs der Teigling-Förderrichtung 41 zu- bzw. abnimmt. In der Flachdruckstation 45 werden die Teiglinge 40 durch das Oberband 46 gegen das Transportband 43 gedrückt.

Bei der Darstellung in Fig. 3 sind mehrere Teiglinge 40 auf dem Transportband 43 nebeneinander, d. h. senkrecht zur Zeichenebene angeordnet. Es ist beispielsweise möglich, dass zehn Teiglinge 40 nebeneinander mit dem Transportband 43 gefördert werden.

Entlang der Teigling-Förderrichtung 41 ist der Flachdruckstation 45 eine erste Zentrierstation 47 nachfolgend angeordnet. Die erste Zentrierstation 47 gewährleistet eine vorbestimmte Positionierung der Teiglinge 40 auf dem Transportband 43 für eine nachfolgende Bearbeitungsstation. Dies ist insbesondere deshalb erforderlich, da infolge einer Krafteinwirkung während der Bearbeitung in der Flachdruckstation 45 die Teiglinge 40 auf dem Transportband 43 unbeabsichtigt deplaziert sein können. Die erste Zentrierstation 47 umfasst mehrere, insbesondere für jeden Teigling 40, ein Zentrierblech 48. Jedes Zentrierblech 48 weist einen senkrecht zum Transportband 43 orientierten, im Wesentlichen U-förmigen Profilquerschnitt auf, wobei zwei sich von einer U-Basis weg erstreckende U-Schenkel trichterförmig bzw. trapezförmig angeordnet sind. Die erste Zentrierstation 47 ist mit den Zentrierblechen 48 bezüglich des Transportbandes 43 höhenverstellbar anordenbar. Die Zentrierstation 47 ist zu der längs der Teigling-Förderrichtung 41 verstellbar anordenbar, wie dies in Fig. 3 durch den Doppelpfeil 94 angedeutet ist.

Entlang der Teigling-Förderrichtung 41 ist der ersten Zentrierstation 47 eine Andrückstation 49 nachgeordnet, die im Wesentlichen der Verdrängungstation 29 der Vorrichtung 1 entspricht, worauf hiermit verwiesen wird. Die Andrückstation 49 umfasst mehrere Druckwerkzeuge in Form von Andrückstempeln 50 zum separaten Andrücken der Teiglinge 40. Die Andrückstempel 50 sind an einer gemeinsamen Andrückplatte 51 an einem den Teiglingen 40 abgewandten Ende der Stempel 50 miteinander verbunden. Die Andrückplatte 51 ermöglicht eine synchrone Betätigung der Andrückstempel 50 mit einem nicht dargestellten Antrieb. Mittels des Transportbandes 43 werden die in der Andrückstation 49 angedrückten Teiglinge 40 zu der Teigformungsstation 52 befördert. Die Teigformungsstation 52 umfasst einen Stempelbalken 53, der oberhalb der zu bearbeitenden Teiglinge 40 angeordnet ist, sowie eine Walze 54, die unterhalb der zu bearbeitenden Teiglinge 40 angeordnet ist. Von der Teigformungsstation 52 werden die geformten Teigringe 40 an ein Abgabe-Transportband 55 übergeben, das entsprechend dem Transportband 43 mittels mehrerer Antriebs-/ Umlenkrollen 44 angetrieben bzw. geführt ist. An dem Abgabe-Transportband 55 ist der Teigformungsstation 52 eine zweite Zentrierstation 56 nachgeordnet. Von der zweiten Zentrierstation 56 werden die Teigringe 40 mittels des Abgabe-Transportbands 55 zu einem Gehänge 57 gefördert. Das Gehänge 57 ist in Form eine Trögels ausgeführt, der geeignet ist, beispielsweise mittels einer nicht dargestellten Förderkette mit mehreren Gehängen verbunden zu sein. Die Förderkette kann beispielsweise über eine Mehrzahl von Umlenkrollen endlos umlaufend ausgeführt sein, sodass ein kontinuierlicher Abtransport der Teigringe von dem Abgabe-Transportband 55 gewährleistet ist. Mittels der Gehänge kann beispielsweise eine nachgelagerte Gärung der Teigringe 40 in der in Fig. 2 dargestellten Gärstation 13a erfolgen.

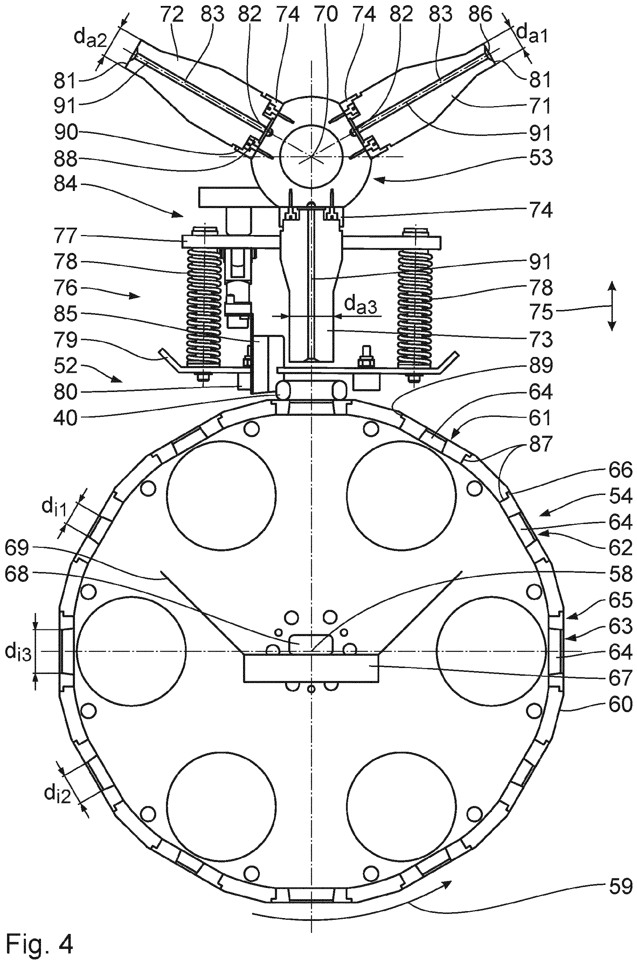

Im Folgenden wird anhand der Fig. 4 die Teigformungsstation 52 im Einzelnen erläutert. Die Teigformungsstation 52 umfasst die in Fig. 4 unten angeordnete Walze 54, die um eine Walzen-Drehachse 58 mittels eines nicht dargestellten Walzantriebs für eine Drehbewegung entlang einer Drehrichtung 59 um die Walzen-Drehachse 58 drehantreibbar ist. Die Walze 54 weist eine senkrecht zur Walzen-Drehachse 58 orientierte polygonförmige Außenkontur auf, die eine zumindest abschnittweise zylinderförmige, äußere Mantelfläche 60 und mehrere an der äußeren Mantelfläche 60 angeordnete Teigformungseinsätze 61, 62, 63 umfasst. Die Zylinderform der äußeren Mantelfläche 60 der Walze ist insbesondere ausschließlich im Bereich der Teigformungseinsätze 61, 62, 63 unterbrochen. Die Teigformungseinsätze 61, 62, 63 sind als Stanz-Matrizen ausgeführt, die als Matrizen-Wechseleinsätze an der Walze 54 montierbar und demontierbar sind. Die Stanz-Matrizen 61, 62, 63 weisen jeweils eine radial zur Walzen-Drehachse 58 orientierte Matrizenöffnung 64 auf. Die Stanz-Matrizen 61, 62, 63 unterscheiden sich dahingehend, dass ein der äußeren Mantelfläche 60 der Walze 54 zugewandter Matrizen-Innendurchmesser dᵢ₁, dᵢ₂, dᵢ₃ verschieden ist. Entlang der Matrizenöffnung 64 weitet sich der Matrizen-Innendurchmesser dᵢ₁, dᵢ₂, dᵢ₃ ausgehend von der äußeren Mantelfläche 60 der Walze 54 hin zum Inneren der Walze konisch auf. Dadurch wird insbesondere ein Durchstoßen des Teiglings 40 während eines Stanzvorgangs erleichtert.

Die Stanz-Matrizen 61, 62, 63 sind rotationssymmetrisch bezüglich der Matrizenöffnung 64 ausgeführt und weisen eine ebene, an der Walze 54 nach außen orientierte Stirnfläche 65 auf. Die Stirnflächen 65 stellen ebene Auflageflächenabschnitte an der äußeren Mantelfläche 60 der Walze 54 dar. Dadurch, dass die Stirnfläche 65 eben ausgeführt ist, ist ein sicheres und definiertes Ablegen eines Teiglings 40 auf der Stirnfläche 65 gewährleistet. An einem der Stirnfläche 65 zugewandten Ende weist die Matrizenöffnung 64 eine Fase auf, die eine mechanische Beanspruchung und damit einen Verschleiß der Stanz-Matrizen 61, 62, 63 während eines Stanzprozesses reduziert.

An der Walze 54 sind parallel zur Walzen-Drehachse 58 an der äußeren Mantelfläche 60, mehrere, gemäß dem gezeigten Ausführungsbeispiel zehn, Stanz-Matrizen 61, 62, 63 zu jeweils einer Teigformungseinsatzanordnung zusammengefasst. Dadurch ist es möglich, das auf der Walze 54 zehn Teigringe 40 gleichzeitig geformt und insbesondere gestanzt werden können. Es ist auch möglich, eine Walze 54 vorzusehen, die mehr oder weniger als zehn Stanz-Matrizen entlang der Walzen-Drehachse 58 aufweist.

Gemäß dem gezeigten Ausführungsbeispiel sind die in einer Teigformungseinsatzanordnung zusammengefassten Stanz-Matrizen 61, 62, 63 jeweils identisch ausgebildet. Entlang der Mantelfläche 60 sind an der Walze 54 entlang der Drehrichtung 59 insgesamt zwölf Teigformungseinsatzanordnungen vorgesehen, wobei jeweils vier Teigformungseinsatzanordnungen Stanz-Matrizen 61 mit dem Matrizen-Innendurchmesser dᵢ₁, Stanz-Matrizen 62 mit dem Matrizen-Innendurchmesser dᵢ₂ und Stanz-Matrizen 63 mit dem Matrizen-Innendurchmesser dᵢ₃ aufweisen. Bezüglich eines Drehwinkels um die Walzen-Drehachse 58 sind die Stanz-Matrizen 61, 62, 63 äquidistant angeordnet. Der Drehwinkel zwischen identischen Stanz-Matrizen 61, 62, 63 beträgt jeweils 90°. In einem derartigen 90°-Segment sind zwei weitere Teigformungseinsatzanordnungen vorgesehen, die jeweils die beiden anderen Stanz-Matrizen umfassen. Entsprechend beträgt ein Drehwinkel bezüglich der Walzen-Drehachse 58 zwischen zwei benachbarten Teigformungseinsatzanordnungen 30°.

Die Stanz-Matrizen 61, 62, 63 weisen ein Außengewinde 87 in Form eines Feingewindes auf, mit dem sie in die Walze 54 einschraubbar sind. Dadurch sind die Stanz-Matrizen 61, 62, 63 schnell und unkompliziert an der Walze 54 montierbar und demontierbar. Da die Verschraubung der Stanz-Matrizen 61, 62, 63 über das jeweils vorgesehene Außengewinde 87 direkt mit der Walze 54 erfolgt, ist es nicht erforderlich, zusätzliche Befestigungsschrauben zum Einschrauben der Stanz-Matrizen 61, 62, 63 in radialer Richtung bezüglich der Walzen-Drehachse 58 vorzusehen. Derartige Befestigungsschrauben wären an der Stirnfläche 65 der Stanz-Matrizen 61, 62, 63 angeordnet und würden Vertiefungen in der Stirnfläche 65 verursachen, die insbesondere dort, wo die Teiglinge verarbeitet werden, nicht erwünscht sind. Die Stanz-Matrizen 61, 62, 63 weisen entsprechend keine Senkbohrungen auf. Die Stanz-Matrizen 61, 62, 63 haben eine glatte, mit Ausnahme der Matrizenöffnung 64, durchgängige Stirnfläche 65. Dadurch kann eine Verschraubung der Stanz-Matrizen 61, 62, 63 in dem Produktbereich vermieden werden. Die Hygiene- und Qualitätsbedingungen bei der Teigring-Herstellung sind dadurch verbessert.

Weiterhin weisen die Stanz-Matrizen 61, 62, 63 einen oberen, der äußeren Mantelfläche 60 zugewandten Tellerabschnitt 66 auf, der einen größeren Außendurchmesser aufweist als das Feingewinde. Der Außendurchmesser des Tellerabschnitts 66 ist als radiale Matrizen-Passfläche 89 ausgeführt. Die Matrizen-Passfläche 89 garantiert die Selbstzentrierung der Stanz-Matrizen 61, 62, 63 an der Walze 54. Der Außendurchmesser des Tellerabschnitts 66 ermöglicht eine selbstzentrierende Montage der Stanz-Matrizen 61, 62, 63 in den dafür vorgesehen Ausnehmungen der Walze 54. Dadurch ist die Stanz-Matrize 61, 62, 63 hinsichtlich einer radialen Positionierung bezüglich der Walzen-Drehachse 58 festgelegt. Die Positionierung der Stanz-Matrize 61, 62, 63 erfolgt mit einer Genauigkeit von 0,02 mm. Insbesondere ist ein Durchdrücken des beispielsweise als Stüpfelform ausgeführten Teigformungseinsatzes in das Innere der Walze 54 infolge einer während eines Stüpfelvorgangs auftretenden, radial zur Walzen-Drehachse 58 wirkenden Stüpfelkraft ausgeschlossen.

Im Inneren der Walze 54 ist ein Austrageband 67 vorgesehen. Das Austrageband 67 ist entlang der Walzen-Drehachse 58 orientiert und dient zur Abförderung von ausgestanzten Teiglingabschnitten 68. Das Austrageband 67 ist bezüglich der Walze 54 feststehend, d. h. bei einer Drehbewegung der Walze 54 um die Walzen-Drehachse 58 entlang der Drehrichtung 59 erfolgt keine Drehung des Austragebands 67. Seitlich an dem Austrageband 67 sind nach oben geöffnete Trichterbleche 69 angeordnet, um zu gewährleisten, dass der ausgestanzte Teiglingabschnitt 68 durch die Matrizenöffnung 64 auf das Austrageband 67 fällt. Das Austrageband 67 ist demontierbar, d. h. aus dem Inneren der Walze 54 entnehmbar. Dadurch ist ein Reinigen der Walze von Innen erleichtert, da die Zugänglichkeit des Walzen-Innenraums verbessert ist.

In Fig. 3 ist der Stempelbalken 53 oberhalb der Walze 54 angeordnet. Der Stempelbalken 53 weist einen bezüglich einer Stempelbalken-Längsachse 70 senkrecht orientierten Profilhohlquerschnitt auf. An dem Stempelbalken 53 sind mehrere Stempel 71, 72, 73 befestigt, die verschiedene Stempel-Außendurchmesser dₐ₁, dₐ₂, dₐ₃ aufweisen. Die Stempel-Außendurchmesser dₐ₁, dₐ₂, dₐ₃ sind den Matrizen-Innendurchmessern dᵢ₁, dᵢ₂, dᵢ₃ korrespondierend gewählt und sind höchstens 0,2 mm größer als der jeweils korrespondierende Matrizen-Innendurchmesser dᵢ₁, dᵢ₂, dᵢ₃, insbesondere höchstens 0,15 mm und insbesondere höchstens 0,1 mm.

Die Stempel 71, 72, 73 sind mittels einer Aufnahmeplatte 74, die an dem Stempelbalken 53 angeschraubt ist, aufgenommen. Die Aufnahme der Stempel 71, 72, 73 in der Aufnahmeplatte 74 erfolgt mittels eines Außen-Feingewindes 88 der Stempel 71, 72, 73. Weiterhin weisen die Stempel 71, 72, 73 eine Stempel-Passfläche 90 auf, die koaxial zu dem Außen-Feingewinde 88 angeordnet ist. Mittels der Stempel-Passfläche 90, der an einer korrespondierenden Aufnahme der Aufnahmeplatte 74 angeordnet ist, sind die Stempel 71, 72, 73 jeweils radial bezüglich einer Stempel-Längsachse 91 ausgerichtet. Die Stempel-Passfläche 90 weist bezüglich der Stempel-Längsachse 91 einen gegenüber dem Stempel-Außengewinde 88 vergrößerten Außendurchmesser auf. Das Stempel-Außengewinde 88 ist an einem dem Stempelbalken 53 zugewandten Ende des Stempels 71, 72, 73 angeordnet. Benachbart zu dem Stempel-Außengewinde 88 ist die Stempel-Passfläche 90 vorgesehen.

Ein Anschlag in einer bezüglich der Stempelbalken-Längsachse 70 radialen Richtung ist durch eine als Passfläche ausgeführte Stirnfläche der Stempel 71, 72, 73 gewährleistet, mit der der Stempel 71, 72, 73 an der Aufnahmeplatte 74 angeordnet ist.

Die Walzen-Drehachse 58 und die Stempelbalken-Längsachse 70 sind parallel zueinander angeordnet. Entlang der Stempelbalken-Längsachse 70 sind mehrere Stempel 71, 72, 73 angeordnet. Mehrere, entlang der Stempelbalken-Längsachse 70 hintereinander angeordnete Stempel 71, 72, 73 sind in einer Stempelanordnung zusammengefasst, wobei insbesondere eine Stempelanordnung ausschließlich identische Stempel 71, 72, 73 umfasst. Entsprechend sind bei dem in Fig. 4 gezeigten Ausführungsbeispiel drei verschiedene Stempelanordnungen mit Stempeln 71, 72, 73 vorgesehen, wobei die Stempelanordnungen an einer Außenseite des Stempelbalkens 53 äquidistant mit einem Drehwinkel von 120° angeordnet sind. Gemäß dem Ausführungsbeispiel in Fig. 4 ist der Stempel 73 in einer Betriebsstellung, d. h. der Walze 54 zugewandt, angeordnet.

Der Stempelbalken 53 weist einen nicht dargestellten Hubantrieb zur Verlagerung des Stempelbalkens 53 entlang einer Hubrichtung 75 auf. Die Hubrichtung 75 ist entsprechend der Darstellung in Fig. 4 vertikal nach oben bzw. vertikal nach unten gerichtet. Die Hubrichtung 75 ist senkrecht zur Walzen-Drehachse 58 orientiert. Mit dem Stempelbalken 53 wird auch der mit der an der Walze 54 befestigten Stanz-Matrize 63 zusammenwirkende Stempel 73 entlang der Hubrichtung 75 verlagert.

An dem Stempelbalken 53 ist weiterhin eine Abstreifvorrichtung 76 vorgesehen, die eine fest mit dem Stempelbalken 53 verbundene Basisplatte 77 und eine über mehrere Druckfedern 78 damit verbundene Abstreiferplatte 79 umfasst. An einer der Walze 53 zugewandten Unterseite weist die Abstreiferplatte 79 mehrere Kontaktelemente 80 in Form von Gummistoppern auf. Die Druckfedern 78 gewährleisten einen entlang der Hubrichtung 75 erforderlichen Mindestabstand zwischen der Basisplatte 77 und der Abstreiferplatte 79. Der Mindestabstand ist derart gewählt, dass der jeweilige Stempel 71, 72, 73 mit einer unteren Ausstanz-Stirnfläche 81 zwischen den beiden Platten 77, 79 angeordnet und dadurch nach einer erfolgten Hubbewegung für einen Stanzvorgang zwischen die Platten 77, 79 zurückkehren kann. Der möglicherweise an einer Außenwand des Stempels 71, 72, 73 anhaftende Teigring 40 wird bei der Rückzug-Hubbewegung des Stempels 71, 72, 73 an der Abstreiferplatte 79 abgestreift und fällt auf die Stirnfläche 65 der Stanz-Matrize 61, 62, 63. Zusätzlich garantiert die Anordnung des Stempels 71, 72, 73 zwischen den Platten 77, 79 einen Schutz vor mechanischen Beeinträchtigungen.

An einer äußeren Mantelfläche weist der Stempelbalken 53 jeweils einen Druckluftkanal 82 auf, der parallel zur Stempelbalken-Längsachse 70 orientiert ist. Die Druckluftkanäle 82 des Stempelbalkens 53 sind derart an der Oberfläche des Stempelbalkens angeordnet, dass sie durch Befestigen der Stempel 71, 72 73 jeweils mit einem konzentrisch zu dem Stempel 71, 72, 73 angeordneten Druckluftkanal 83 verbindbar sind. Das bedeutet, dass durch die Befestigung der Stempel 71, 72, 73 an dem Stempelbalken 53 ein durchgängiger Druckluftkanal 82, 83 von dem Stempelbalken 53 bis zur Ausstanz-Stirnfläche 81 des jeweiligen Stempels 71, 72, 73 gegeben ist. Durch die Verwendung einer nicht dargestellten Steuerscheibe ist es möglich, dass lediglich der zum Ausstanzen verwendete Stempel, d. h. gemäß Fig. 4 der Stempel 73, mit Druckluft beaufschlagt wird. Dadurch wird der Druckluftverbrauch reduziert. Weiterhin wird der durch die Druckluftbeaufschlagung verursachte Geräuschpegel reduziert.

Die Teigformungsstation 52 weist weiterhin eine Zentriervorrichtung 84 auf, die unabhängig von der Hubbewegung des Stempelbalkens 53 entlang der Hubrichtung 75 verlagerbar ist. Die Zentriervorrichtung 84 weist mehrere, jeweils einem der Stempel 71, 72, 73 zugeordnete Zentriereinrichtungen 85 auf, die im Wesentlichen identisch zu den Zentrierblechen 48 der ersten Zentrierstation 47 ausgebildet sind, womit hierauf verwiesen wird.

Im Folgenden wird ein Verfahren zum Betrieb der Vorrichtung 39 mit den in Fig. 3 und 4 dargestellten Bearbeitungsstationen näher erläutert. Das Verfahren entspricht im Wesentlichen dem anhand der in Fig. 1 dargestellten Vorrichtung 1 erläuterten Verfahren bis einschließlich der Übergabe der Teiglinge von dem Förderbandabschnitt 24 an den Förderbandabschnitt 26. Entsprechend sind die Teiglinge 40, die an die in Fig. 3 rechts dargestellte Bestreuungsstation 42 übergeben werden, vorab in der Portionier- und Rundwirkeinrichtung und in der Gär- und Formvorrichtung bearbeitet worden.

In der Bestreuungsstation 42 werden die Teiglinge 40 mit Mehl bestreut. Anschließend werden die bestreuten Teiglinge 40 mit dem Transportband 42 entlang der Teigling-Förderrichtung 41 zu der Flachdruckstation 45 befördert und dort flachgedrückt. Von dort erfolgt ein weiterer Transport mit dem Transportband 43 zu der ersten Zentrierstation 47, wobei anschließend die auf dem Transportband 43 zentriert angeordneten, mit Mehl bestreuten und flachgedrückten Teiglinge 40 in der Andrückstation 49 angedrückt werden. Für einen Weitertransport der Teiglinge 40 auf dem Transportband 43 wird die erste Zentrierstation 47 angehoben, d. h. von dem Transportband 43 wegverlagert. Die angedrückten Teiglinge 40 werden mittels des Transportbandes 43 an die Walze 54 der Teigformungsstation 52 übergeben, indem diese auf die in Fig. 3 dargestellte Ausstanzmatrize 63, die den größten Matrizen-Innendurchmesser dᵢ₃ aufweist, abgelegt werden. Die Ausstanzmatrize 63 befindet sich zunächst in der "Ein-Uhr-Position", d. h. gegenüber einer obersten, dem Stanzstempel 73 zugewandten Position um 30° bezüglich der Walzen-Drehachse 58 entgegen der Drehrichtung 59 versetzt angeordnet. Sobald der Teigling 40 auf der Ausstanzmatrize 63 angeordnet ist, dreht die Walze 54 um die Walzen-Drehachse 58 in der Drehrichtung 59 um 60°, sodass der auf der ebenen Stirnfläche 65 Ausstanzmatrize 63 angeordnete Teigling 40 in einer horizontalen Position und dem entsprechenden Stempel 73 zugewandt positioniert ist. Eine Zentrierung des Teiglings 40 erfolgt mittels der Zentriereinrichtung 85.

Bei dem in Fig. 4 dargestellten Zustand ist die Übergabe von dem Transportband 43 an die Teigformungsstation 52, d. h. an die Ausstanz-Matrize 63, sowie die 30°-Drehung um die Walzen-Drehachse 58 bereits erfolgt. Der zentriert angeordnete Teigling 40 ist auf der eben ausgebildeten Stirnfläche 65 der Stanz-Matrize 63 abgelegt. Durch eine Hubbewegung des Stempelbalkens 53 mit dem Stempel 73 entlang der Hubrichtung 75 nach unten wird der Teiglingabschnitt 68 aus dem Teigling 40 ausgestanzt und durch die Matrizenöffnung 64 in das Walzeninnere auf das Austrageband 67 gestoßen. Durch das Austrageband 67 ist der sichere und schnelle Abtransport der ausgestanzten Teigreste 68 gewährleistet. Diese Teigreste 68 werden hygienisch gesammelt und können insbesondere automatisch zu der Knetvorrichtung transportiert und somit für eine Weiterverwendung zu Teig genutzt werden. Ein derartiges Verfahren ist effizient und ökonomisch.

Dadurch, dass an der Unterseite der Abstreiferplatte 79 die Kontaktelemente 80 vorgesehen sind, liegen die Kontaktelemente 80 bei einer nach unten gerichteten Hubbewegung des Stempelbalkens 53 an einem nicht dargestellten Gestell der Teigformungsstation 52 auf. Das Gestell ist ortsfest mit der Vorrichtung 39 zur Formung des Teigrings 40 verbunden. Dadurch ist eine weitere vertikale Abwärtsbewegung der Abstreiferplatte 79 verhindert, wodurch die Druckfedern 78 komprimiert werden. Die Abstreiferplatte 79 wird relativ zur Basisplatte 77 hinbewegt. Dadurch kann der Stempel 73 mit der Ausstanzstirnfläche 81 durch die Öffnung in der Abstreiferplatte 79 hervorragen und den Teiglingabschnitt 68 aus dem Teigring 40 ausstanzen. Wenn der Stempelbalken 54 mit dem Stempel 73 nach dem Ausstanzvorgang entlang der Hubrichtung 75 nach oben bewegt wird, werden die Druckfedern 78 entspannt und anschließend die Abstreiferplatte 79 zusammen mit der Basisplatte 77 angehoben. Der möglicherweise an der Außenwand des Stempels 73 anhaftende Teigring 40 wird dadurch an der Abstreiferplatte 79 abgestreift. Der Teigring 40 fällt infolge der Schwerkraft auf die Stirnfläche 65 der Stanz-Matrize 63. Die Höhe der Kontaktelemente 80 ist derart bestimmt, dass eine Beschädigung des auf der Stanz-Matrize 63 aufliegenden Teigrings 40 durch die Abstreiferplatte 79 ausgeschlossen ist. Um die Möglichkeit eines Anhaftens des ausgestanzten Teiglingabschnitts 68 an der Ausstanzstirnfläche 81 des Stempels 73 zu reduzieren, kann Druckluft über den Druckluftkanal 82, 83 auf den Teiglingabschnitt 68 ausgeübt werden. Um eine möglichst großflächige Druckluftbeaufschlagung des Teiglingabschnitts 68 zu ermöglichen, weisen die Druckluftkanäle 83 an der Ausstanzstirnfläche 81 einen trichterförmigen Bereich 86 auf.

Nachdem der Ausstanzvorgang abgeschlossen ist, wird die Zentriervorrichtung 84 mit den Zentriereinrichtungen 85 entlang der Hubrichtung 75 nach oben verlagert, um einen Weitertransport der Teigringe 40 zu ermöglichen. Dabei kann die Zentriervorrichtung 84 einen separaten Hubantrieb aufweisen.

Der Weitertransport der ausgestanzten Teigringe 40 erfolgt durch eine Drehung der Walze 54 entlang der Drehrichtung 59 um etwa 60°, sodass der ausgestanzte Teigring 40 an das Abgabe-Transportband 55, das in Fig. 3 dargestellt ist, übergeben wird. Dort erfolgt zunächst eine Zentrierung der ausgestanzten Teigringe 40 mittels der zweiten Zentrierstation 56 und abschließend eine Übergabe der zentriert abgelegten Teigringe 40 in das Gehänge 57.

Durch die 60°-Drehung der Walze 54 zur Übergabe der ausgestanzten Teigringe 40 an das Abgabe-Transportband 55 wird gleichzeitig die in Fig. 3 in der "Drei-Uhr-Position" befindliche Stanz-Matrize 63 in die "Ein-Uhr-Position" verlagert und ist zur Aufnahme des nächsten auszustanzenden Teigrings 40 vorbereitet. Daraus wird klar, dass die Teigformung mittels der Teigformungsstation 52 im Wesentlichen kontinuierlich erfolgen kann, wobei lediglich während eines Ausstanzvorgangs die Drehbewegung der Walze 54 um die Walzen-Drehachse 58 angehalten ist. Die kontinuierliche Betriebsweise der Teigformungsstation kann beispielsweise durch eine nicht dargestellte Steuerungseinheit garantiert werden, die eine elektronische Zwangssteuerung mittels einer sogenannten elektronischen Kurvenscheibe, die auch als virtuelle Kurvenscheibe bezeichnet wird, ermöglicht. Die elektronische Zwangs steuerung kann in Form einer Master-Slave-Steuerung ausgeführt sein und ermöglicht die Zwangssteuerung der Teigformungsstation 52, die einen Slave-Prozess darstellt. Die Steuerung des Slave-Prozesses an der Teigformungsstation 52 erfolgt durch Überwachung eines Master-Prozesses, der insbesondere an der vorgelagerten Gärstation der Vorrichtung 39 erfolgt. Dazu wird ein virtueller Leitwert als Softwaresignal beispielsweise in Form eines Positionssignals der Teiglinge oder eines Geschwindigkeitssignals der Teiglingförderung an die Steuerungseinheit zur Steuerung des Walzenantriebs und/oder des Hubantriebs des Stempelbalkens 53 dient.

Die Teigformungsstation 52 führt zu einem reduzierten Verschleiß insbesondere der Stanz-Matrizen 61, 62, 63, da diese gemäß dem Ausführungsbeispiel in vierfacher Ausführung an der Walze 54 angeordnet sind und somit lediglich bei jedem vierten Hub des Stempelbalkens 53 zur Bearbeitung des Teiglings 40 mit dem jeweiligen Stempel zusammenwirken. Die Beanspruchungshäufigkeit der Stanz-Matrizen 61, 62, 63 ist also auf 25 % reduziert. Entsprechend kann die Lebensdauer der Stanz-Matrizen 61, 62, 63 auf das Vierfache gesteigert werden. Für den Fall, dass an der Walze 54 gemäß dem gezeigten Ausführungsbeispiel ausschließlich identische Stanz-Matrizen 61, 62, 63 verwendet werden, kann die Standzeit auf bis zu dem zwölffachen Wert der Ausgangsstandzeit einer Stanz-Matrize 61, 62, 63 gesteigert werden. So ist es beispielsweise auch möglich, bei einem Produkt, das in sehr hohen Stückzahlen herzustellen ist, zwölf identische Stanz-Matrizen an der Walze 54 vorzusehen, um somit eine sehr hohe Standzeit identischer Stanz-Matrizen zu ermöglichen. Dadurch, dass die Stanz-Matrizen 61, 62, 63 in die Walze 54 einschraubbar sind, ist eine Montage und Demontage der Stanz-Matrizen schnell und unkompliziert möglich. Darüber hinaus ist deren Justage an dem Walzenkörper mit hoher Genauigkeit möglich. Die Stanz-Matrizen sind an der Walze 54 selbstzentrierend angeordnet. Der Aufbau der Teigformungsstation 52 ist kompakt und damit platzsparend in der Vorrichtung 39 zur Formung von Teigringen 40 anordenbar.

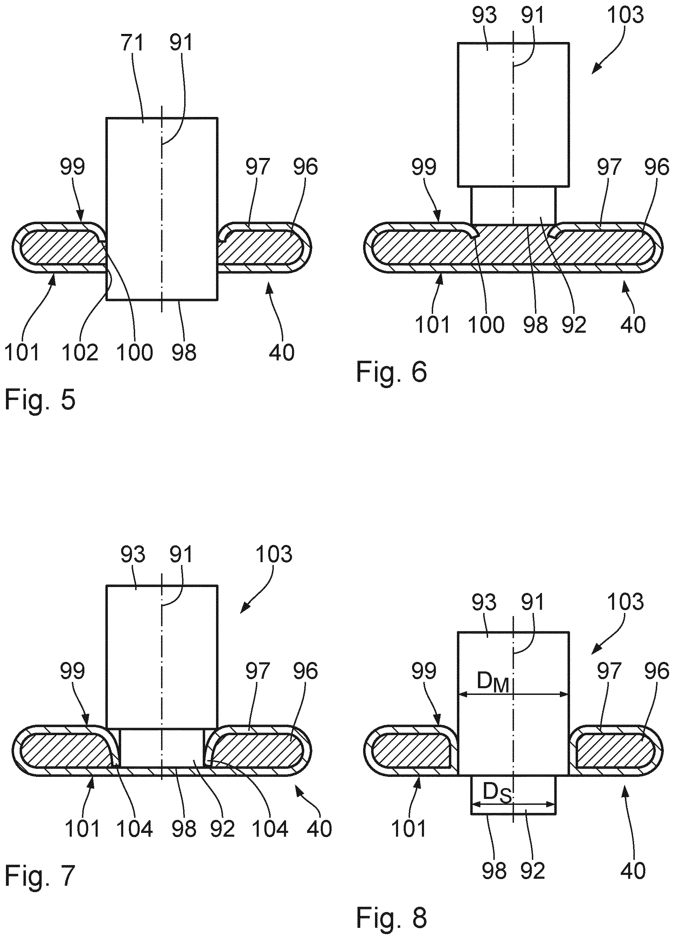

Im Folgenden wird ein Stanzvorgang mit einem Stanzstempel 71 gemäß einem ersten Ausführungsbeispiel näher erläutert. Der Stanzstempel 71 weist eine Stempel-Längsachse 91 auf und ist bezüglich dieser rotationssymmetrisch als Zylinder ausgeführt. Entlang der Stempel-Längsachse 91 weist der Stempel 71 einen konstanten Durchmesser auf. Bei der gezeigten Darstellung hat ein Ausstanzen eines Teigling-Abschnitts bereits stattgefunden, d. h. der Stempel 71 ist entlang der Stempel-Längsachse 91 gemäß der Darstellung in Fig. 5 nach unten bewegt worden. Der Teigling 40 weist eine im Wesentlichen homogene, innere Teigmasse 96 auf, die von einer geschlossenen Außenhaut 97, die insbesondere fein ausgeführt ist, eingeschlossen ist. Die Teigmasse 96 kann derart zähflüssig sein, dass durch die Außenhaut 97 in der Scheibenform des Teiglings 40 gehalten ist. Ein Zerstören der Außenhaut 97 kann zu einer ungewünschten Deformation des Teiglings 40 führen, da die zähflüssige Teigmasse 96 aus dem offenen Teigling 40 austreten könnte.

Beim Ausstanzen durchstößt der Stempel 71 mit einer unten angeordneten Stanzfläche 98 eine obere Stirnfläche 99 des Teiglings. Beim Durchtrennen der oberen Stirnfläche 99 wird eine offene, insbesondere ringförmige Schnittfläche 100 der oberen Stirnfläche 99 erzeugt, die in Form eines Schneidgrates nach innen in das Innere des Teiglings 40, d. h. zur Teigmasse 96 gerichtet ist. Beim weiteren Eindringen des Stempels 71 in den Teigling 40 und beim Durchstoßen auch einer unteren Stirnfläche 101 des Teiglings 40 wird der Teigling-Abschnitt ausgestoßen und somit ein Teigring erzeugt. Bei einem Zurückziehen des Stempels 71 aus dem Teigring 40, d. h. gemäß der Darstellung in Fig. 5 einer Verlagerung des Stempels 71 nach oben ist der Stanzvorgang abgeschlossen. Ein derartiges Stanzverfahren ist unkompliziert und insbesondere schnell durchführbar. Ein derartiges Stanzverfahren eignet sich insbesondere für Teigling 40 mit einer Teigmasse hoher Viskosität, d. h. die Teigmasse 96 ist zähflüssig. Entsprechend ist es unproblematisch, wenn in Folge des Stanzvorgangs zwischen der ringförmigen Schnittfläche 100 der oberen Stirnfläche 99 und der unteren Stirnfläche 101 eine offene, im Wesentlichen zylindermantelförmige Trennfläche 102 resultiert.

Im Folgenden wird anhand der Fig. 6 bis 8 ein zweites Ausführungsbeispiel eines Stanzstempels 103 näher erläutert. Komponenten, die denjenigen entsprechen, die vorstehend schon unter Bezugnahme auf die Fig. 1 bis 5 erläutert wurden, tragen die gleichen Bezugszeichen und werden nicht nochmals im Einzelnen diskutiert.

Der Stempel 103 weist einen Stanzabschnitt 92 mit einem Stanz-Durchmesser D_{S} und einem Mitnahmeabschnitt 93 mit einem Mitnahme-Durchmesser D_{M} auf. Die beiden Abschnitte 92, 93 sind entlang der Stempel-Längsachse 91 hintereinander und konzentrisch zur Stempel-Längsachse 91 angeordnet. Die beiden Abschnitte 92, 93 sind zylindrisch, können aber auch andere Querschnittsformen aufweisen. An dem Stanzabschnitt 92 ist die Stanzfläche 98 vorgesehen, die zum Vorstanzen und insbesondere zum Durchtrennen der oberen Stirnfläche 99 der Außenhaut 97 des Teiglings dient.

Das Durchstoßen der Außenhaut 97 im Bereich der oberen Stirnfläche 99 ist in Fig. 6 dargestellt. Bei der Fortsetzung des Stanzvorgang, d. h. bei einer weiteren Verlagerung des Stempels 103 entlang der Stempel-Längsachse 91 nach unten (vgl. Fig. 7) wird die offene Schnittfläche 100 von dem Mitnahmeabschnitt 93, der einen größeren Durchmesser aufweist als der Stanzabschnitt 92 mitgenommen, d. h. die freien Enden 104 der Schnittfläche 100 werden nach innen in das Innere des Teiglings 40 gedrückt und somit hin zu der unteren Schnittfläche 101 der Außenhaut 97 gedrückt.

Wenn auch der Mitnahmeabschnitt 93, wie in Fig. 8 dargestellt, den Teigling 40 vollständig durchdrungen hat, werden die Enden 104 der oberen Stirnfläche 99 mit der unteren Stirnfläche 101 verbunden. Daraus resultiert ein Teigring, der eine geschlossene Außenhaut sowohl an einem äußeren Scheibendurchmesser als auch an einen inneren, zylindermantelförmigen Innenring hat. Der Stempel 103 ermöglicht somit ein Stanzen eines Teigrings, der insbesondere eine dünnflüssige Teigmasse 96 aufweisen kann, die beispielweise von der Außenhaut 97 gehalten ist. Dadurch, dass die Außenhaut auch nach dem Stanzvorgang dauerhaft verschlossen ist, ist ein Austreten der dünnflüssigen Teigmasse 96 vermieden. Der somit hergestellte Teigring 40 weist eine hohe Formgenauigkeit und gute Maßhaltigkeit auf.

Der Stanz-Durchmesser D_{S} ist gegenüber dem Mitnahme-Durchmesser D_{M} derart reduziert, dass die freien Enden 104 der Schnittfläche 100 der Außenhaut 97 an der oberen Stirnfläche 99 lang genug sind, um von dem Mitnahmeabschnitt 93 mitgenommen, zu der unteren Stirnfläche 101 verlagert und dort mit dieser verbunden zu werden. Insbesondere beträgt eine Durchmesserdifferenz ein Vielfaches eines Abstands zwischen der oberen Stirnfläche 99 und der unteren Stirnfläche 101, insbesondere das doppelte des Abstandes zwischen den beiden Stirnflächen 99, 101. Der Abstand zwischen den beiden Stirnflächen 99, 101 wird auch als Dicke des Teiglings bezeichnet.

## Patentansprüche

1. Teigformungsstation (52) für eine Vorrichtung zur Formung eines Teigrings (40), umfassend
a. eine Walze (54) mit
i. einer Walzen-Drehachse (58) und
ii. mehreren an einer äußeren Mantelfläche (60) der Walze (54) angeordneten Teigformungseinsätzen (61, 62, 63),
**dadurch gekennzeichnet, dass**
b. ein eine Stempelbalken-Längsachse (70) aufweisenden Stempelbalken (53) mit mindestens einem Stempel (71, 72, 73; 103) vorgesehen ist,
c. ein Hubantrieb zur Verlagerung des Stempelbalkens (53) mit dem mindestens einen Stempel (71, 72, 73; 103) entlang einer senkrecht zur Walzen-Drehachse (58) orientierten Hubrichtung (75) vorgesehen ist,
d. die Walzen-Drehachse (58) und die Stempelbalken-Längsachse (70) parallel zueinander orientiert sind,
e. mehrere entlang einer Drehrichtung (59) um die zur Walzen-Drehachse (58) angeordnete Teigformungseinsätze (61, 62, 63) vorgesehen sind,
f. zur Formung des Teigrings (40) ein Teigling (40) zwischen dem mindestens einen Stempel (71, 72, 73; 103) und einem Teigformungseinsatz (61, 62, 63) anordenbar ist, wobei der mindestens eine Stempel (71, 72, 73; 103) und der Teigformungseinsatz (61, 62, 63) derart aufeinander abgestimmt sind, dass zur Teigformung in der Teigformungsstation (52) der Stempel (71, 72, 73; 103) während der Hubbewegung zumindest abschnittweise und/oder zumindest zeitweise in einer von dem Teigformungseinsatz (61, 62, 63) gebildeten Teigformungseinsatzöffnung anordenbar ist.

2. Teigformungsstation (52) nach Anspruch 1, **dadurch gekennzeichnet, dass** die Walze (54) einen Walzenantrieb für eine Drehbewegung entlang der Drehrichtung (59) derart aufweist, dass ein Teigformungseinsatz (61, 62, 63) dem mindestens einen korrespondierenden Stempel (71, 72, 73; 103) zugewandt ist.

3. Teigformungsstation (52) nach einem der vorstehenden Ansprüche, **gekennzeichnet durch** eine Teigformungseinsatzanordnung, die mehrere parallel zur Walzen-Drehachse (58) angeordnete Teigformungseinsätze (61, 62, 63) aufweist, und eine Stempelanordnung, die mehrere entlang der Stempelbalken-Längsachse (70) an dem Stempelbalken (53) angeordnete Stempel (71, 72, 73; 103) aufweist.

4. Teigformungsstation (52) nach Anspruch 3, **gekennzeichnet durch** mehrere Teigformungseinsatzanordnungen, die entlang der Drehrichtung (59) um die zur Walzen-Drehachse (58) angeordnet sind.

5. Teigformungsstation (52) nach Anspruch 4, **dadurch gekennzeichnet, dass** zwischen den äquidistant angeordneten Teigformungseinsatzanordnungen weitere Teigformungseinsatzanordnungen vorgesehen sind, die insbesondere verschiedenartige Teigformungseinsätze (61, 62, 63) aufweisen.

6. Teigformungsstation (52) nach einem der Ansprüche 3 bis 5, **gekennzeichnet durch** mehrere Stempelanordnungen an dem Stempelbalken (53), wobei insbesondere die Stempel (71, 72, 73; 103) verschiedener Stempelanordnungen unterschiedliche Stempel-Außendurchmesser (dₐ₁, dₐ₂, dₐ₃) aufweisen.

7. Teigformungsstation (52) nach einem der vorstehenden Ansprüche, **dadurch gekennzeichnet, dass** die Teigformungseinsätze (61, 62, 63) selbstzentrierend an der Walze (54) angeordnet sind, insbesondere ein Gewinde und insbesondere ein Feingewinde zum Anschrauben an die Walze (54) aufweisen.

8. Teigformungsstation (52) nach einem der vorstehenden Ansprüche, **gekennzeichnet durch** Stanz-Matrizen (61, 62, 63), insbesondere Matrizen-Wechseleinsätze, als Teigformungseinsätze.

9. Teigformungsstation (52) nach Anspruch 8, **dadurch gekennzeichnet, dass** die Stanz-Matrizen (61, 62, 63) verschiedene Matrizen-Innendurchmesser (dᵢ₁, dᵢ₂, dᵢ₃) aufweisen.

10. Teigformungsstation (52) nach einem der vorstehenden Ansprüche, **gekennzeichnet durch** eine senkrecht zur Walzen-Drehachse (58) orientierte polygonförmige Außenkontur der Walze (54) mit im Wesentlichen ebenen Auflageflächenabschnitten (65) der Teigformungseinsätze (61, 62, 63).

11. Teigformungsstation (52) nach einem der vorstehenden Ansprüche, **gekennzeichnet durch** eine dem mindestens einen Stempel (71, 72, 73) zugeordnete Zentriereinrichtung (85) zur Zentrierung des Teigrings (40) auf dem Teigformungseinsatz (61, 62, 63) vor der Teigformung durch den mindestens einen Stempel (71, 72, 73; 103).

12. Teigformungsstation (52) nach einem der vorstehenden Ansprüche, **dadurch gekennzeichnet, dass** der mindestens eine Stempel (71, 72, 73; 103) selbstzentrierend an dem Stempelbalken (53) angeordnet ist, insbesondere ein Gewinde und insbesondere ein Feingewinde zum Anschrauben an dem Stempelbalken (53) sowie insbesondere Passfläche zum Anordnen an dem Stempelbalken (53) in einer definierten Position aufweisen.

13. Teigformungsstation nach einem der vorstehenden Ansprüche, **dadurch gekennzeichnet, dass** eine Steuerungseinheit zur elektronischen Zwangssteuerung, insbesondere einer Master-Slave-Steuerung, mit der Teigformungsstation (52) in Signalverbindung steht, wobei insbesondere die Teigbearbeitung an einer Gärstation als Master-Prozess für die Teigbearbeitung die Teigformungsstation (52) als Slave-Prozess dient.

14. Teigformungsstation nach einem der vorstehenden Ansprüche, **dadurch gekennzeichnet, dass** der mindestens eine Stempel (103) einen Stanzabschnitt (92) mit einem Stanz-Durchmesser (D_{S}) und einem Mitnahmeabschnitt (93) mit einem Mitnahme-Durchmesser (D_{M}) aufweist, wobei der Stanz-Durchmesser (Ds) größer ist als der Mitnahme-Durchmesser (D_{M}).

15. Vorrichtung zur Formung eines Teigrings (40) mit einer Teigformungsstation nach einem der vorstehenden Ansprüche.

## Claims

1. Dough forming station (52) for a device for forming a dough ring (40), comprising
a. a roller (54) with
i. a roller rotational axis (58) and
ii. a plurality of dough forming inserts (61, 62, 63) arranged on an outer lateral surface (60) of the roller (54),
**characterised in that**
b. a punch beam (53), which has a punch beam longitudinal axis (70), with at least one punch (71, 72, 73; 103) is provided,
c. a lifting drive is provided to displace the punch beam (53) with the at least one punch (71, 72, 73; 103) along a stroke direction (75) oriented perpendicular to the roller rotational axis (58),
d. the roller rotational axis (58) and the punch beam longitudinal axis (70) are oriented parallel to one another,
e. a plurality of dough forming inserts (61, 62, 63) arranged about the roller longitudinal axis (58) along a rotational direction (59) are provided,
f. in order to form the dough ring (40), a dough piece (40) is arrangeable between the at least one punch (71, 72, 73; 103) and a dough forming insert (61, 62, 63), wherein the at least one punch (71, 72, 73; 103) and the dough forming insert (61, 62, 63) are matched to one another in such a way that for dough forming in the dough forming station, the punch (71, 72, 73; 103) is arrangeable, during the stroke movement, at least in portions and/or at least temporarily, in a dough forming insert opening formed by the dough forming insert (61, 62, 63).

2. Dough forming station (52) according to claim 1, **characterised in that** the roller (54) has a roller drive for a rotational movement along the rotational direction (59) in such a way that a dough forming insert (61, 62, 63) faces the at least one corresponding punch (71, 72, 73; 103).

3. Dough forming station (52) according to any one of the preceding claims, **characterised by** a dough forming insert arrangement, which has a plurality of dough forming inserts (61, 62, 63) arranged parallel to the roller rotational axis (58), and a punch arrangement, which has a plurality of punches (71, 72, 73; 103) arranged on the punch beam (53) along the punch beam longitudinal axis (70).

4. Dough forming station (52) according to claim 3, **characterised by** a plurality of dough forming insert arrangements, which are arranged about the roller rotational axis (58) along the rotational direction (59).

5. Dough forming station (52) according to claim 4, **characterised in that** further dough forming insert arrangements, which, in particular, have various types of dough forming inserts (61, 62, 63), are provided between the equidistantly arranged dough forming insert arrangements.

6. Dough forming station (52) according to any one of claims 3 to 5, **characterised by** a plurality of punch arrangements on the punch beam (53), the punches (71, 72, 73; 103), in particular, of various punch arrangements having different external punch diameters (dₐ₁, dₐ₂, dₐ₃).

7. Dough forming station (52) according to any one of the preceding claims, **characterised in that** the dough forming inserts (61, 62, 63) are arranged in a self-centring manner on the roller (54) and, in particular, have a thread, and, in particular, a fine thread, for screwing onto the roller (54).

8. Dough forming station (52) according to any one of the preceding claims, **characterised by** stamping matrices (61, 62, 63), in particular matrix changing inserts, serving as dough forming inserts.

9. Dough forming station (52) according to claim 8, **characterised in that** the stamping matrices (61, 62, 63) have different internal matrix diameters (di₁, dᵢ₂, dᵢ₃).

10. Dough forming station (52) according to any one of the preceding claims, **characterised by** a polygonal external contour of the roller (54) oriented perpendicular to the roller rotational axis (58), with substantially level support face portions (65) of the dough forming inserts (61, 62, 63).

11. Dough forming station (52) according to any one of the preceding claims, **characterised by** a centring means (85) associated with the at least one punch (71, 72, 73), for centring the dough ring (40) on the dough forming insert (61, 62, 63) before the dough forming by the at least one punch (71, 72, 73; 103).

12. Dough forming station (52) according to any one of the preceding claims, **characterised in that** the at least one punch (71, 72, 73; 103) is arranged in a self-centring manner on the punch beam (53), in particular has a thread and, in particular, a fine thread, for screwing on the punch beam (53), as well as, in particular, a fitting surface for arranging on the punch beam (53) in a defined position.

13. Dough forming station according to any one of the preceding claims, **characterised in that** a control unit for electronic forced control, in particular a master-slave control, is in signal connection to the dough forming station (52), wherein, in particular, the dough processing at a fermenting station is used as the master process for the dough processing and the dough forming station (52) is used as the slave process.

14. Dough forming station according to any one of the preceding claims, **characterised in that** the at least one punch (103) has a stamping portion (92) with a stamping diameter (Ds) and an entraining portion (93) with an entraining diameter (D_{M}), the stamping diameter (Ds) being larger than the entraining diameter (D_{M}).

15. Device for forming a dough ring (40) with a dough forming station according to any one of the preceding claims.

## Revendications

1. Station de formage de pâte (52) pour un dispositif de formage d'un anneau de pâte (40), comprenant
a. un cylindre (54) avec
i. un axe de rotation de cylindre (58) et
ii. plusieurs inserts de formage de pâte (61, 62, 63) agencés sur une surface extérieure (60) du cylindre (54),
**caractérisée en ce que**
b. une barre de poinçons (53) présentant un axe longitudinal (70) de barre de poinçons est prévue avec au moins un poinçon (71, 72, 73 ; 103),
c. un entraînement de levage pour le déplacement de la barre de poinçons (53) avec ledit au moins un poinçon (71, 72, 73 ; 103) le long d'un sens de levage (75) orienté perpendiculairement à l'axe de rotation de cylindre (58) est prévu,
d. l'axe de rotation de cylindre (58) et l'axe longitudinal de barre de poinçons (70) sont orientés parallèlement l'un à l'autre,
e. plusieurs inserts de formage de pâte (61, 62, 63) agencés le long d'un sens de rotation (59) autour de l'axe de rotation de cylindre (58) sont prévus,
f. pour le formage de l'anneau de pâte (40), un pâton (40) peut être placé entre ledit au moins un poinçon (71, 72, 73 ; 103) et un insert de formage de pâte (61, 62, 63), dans laquelle ledit au moins un poinçon (71, 72, 73 ; 103) et l'insert de formage de pâte (61, 62, 63) sont adaptés les uns aux autres de telle manière que pour le formage de pâte dans la station de formage de pâte (52), le poinçon (71, 72, 73 ; 103) peut être agencé au moins en partie et/ou au moins temporairement dans une ouverture d'insertion de formage de pâte formée par l'insert de formage de pâte (61, 62, 63) pendant le mouvement de levage.

2. Station de formage de pâte (52) selon la revendication 1, **caractérisée en ce que** le cylindre (54) comprend un entraînement de cylindre pour un mouvement rotatif le long du sens de rotation (59), de telle manière qu'un insert de formage de pâte (61, 62, 63) est tourné vers ledit au moins un poinçon (71, 72, 73 ; 103) correspondant.

3. Station de formage de pâte (52) selon l'une quelconque des revendications précédentes, **caractérisée par** un ensemble d'inserts de formage de pâte, qui comprend plusieurs inserts de formage de pâte (61, 62, 63) agencés parallèlement à l'axe de rotation de cylindre (58), et un ensemble de poinçons, qui comprend plusieurs poinçons (71, 72, 73 ; 103) agencés sur la barre de poinçons (53) le long de l'axe longitudinal (70) de barre de poinçons.

4. Station de formage de pâte (52) selon la revendication 3, **caractérisée par** plusieurs ensembles d'inserts de formage de pâte, qui sont agencés le long du sens de rotation (59) autour de l'axe de rotation de cylindre (58).

5. Station de formage de pâte (52) selon la revendication 4, **caractérisée en ce que** d'autres ensembles d'inserts de formage de pâte, qui présentent en particulier différents types d'inserts de formage de pâte (61, 62, 63), sont prévus entre les ensembles d'inserts de formage de pâte agencés de manière équidistante.

6. Station de formage de pâte (52) selon l'une quelconque des revendications 3 à 5, **caractérisée par** plusieurs ensembles de poinçons sur la barre de poinçons (53), dans laquelle les poinçons (71, 72, 73 ; 103) de différents ensembles de poinçons présentent différents diamètres extérieurs de poinçon (dₐ₁, dₐ₂, dₐ₃).

7. Station de formage de pâte (52) selon l'une quelconque des revendications précédentes, **caractérisée en ce que** les inserts de formage de pâte (61, 62, 63) sont agencés de manière auto-centrée sur le cylindre (54), et présentent en particulier un filetage et en particulier un filetage fin afin d'être vissés sur le cylindre (54).

8. Station de formage de pâte (52) selon l'une quelconque des revendications précédentes, **caractérisée par** des matrices d'estampage (61, 62, 63), en particulier des inserts interchangeables de matrice, comme inserts de formage de pâte.

9. Station de formage de pâte (52) selon la revendication 8, **caractérisée en ce que** les matrices d'estampage (61, 62, 63) présentent différents diamètres intérieurs de matrice (dᵢ₁, dᵢ₂, dᵢ₃).

10. Station de formage de pâte (52) selon l'une quelconque des revendications précédentes, **caractérisée par** un contour extérieur polygonal du cylindre (54), orienté perpendiculairement à l'axe de rotation de cylindre (58) et pourvu de sections de surface d'appui (65) sensiblement planes des inserts de formage de pâte (61, 62, 63).

11. Station de formage de pâte (52) selon l'une quelconque des revendications précédentes, **caractérisée par** un dispositif de centrage (85) associé audit au moins un poinçon (71, 72, 73) et destiné à centrer l'anneau de pâte (40) sur l'insert de formage de pâte (61, 62, 63) avant le formage de pâte au moyen dudit au moins un poinçon (71, 72, 73 ; 103).

12. Station de formage de pâte (52) selon l'une quelconque des revendications précédentes, **caractérisée en ce que** ledit au moins un poinçon (71, 72, 73 ; 103) est agencé de manière auto-centrée sur la barre de poinçons (53), et présente en particulier un filetage et en particulier un filetage fin afin d'être vissé sur la barre de poinçons (53) ainsi qu'en particulier une surface d'ajustage afin d'être agencé sur la barre de poinçons (53) dans une position définie.

13. Station de formage de pâte selon l'une quelconque des revendications précédentes, **caractérisée en ce qu'**une unité de commande destinée à une commande forcée électronique, en particulier à une commande maître-esclave, est en liaison de signalisation avec la station de formage de pâte (52), dans laquelle le traitement de la pâte sur une station de fermentation en tant que processus maître sert de base au traitement de la pâte sur la station de formage (52) en tant que processus esclave.

14. Station de formage de pâte selon l'une quelconque des revendications précédentes, **caractérisée en ce que** ledit au moins un poinçon (103) présente une section d'estampage (92) avec un diamètre d'estampage (D_{S}) et une section d'entraînement (93) avec un diamètre d'entraînement (D_{M}), dans laquelle le diamètre d'estampage (D_{S}) est supérieur au diamètre d'entraînement (D_{M}).

15. Dispositif de formage d'un anneau de pâte (40) comprenant une station de formage de pâte selon l'une quelconque des revendications précédentes.
